# EUROPEAN PATENT APPLICATION

(11) **EP 3 944 783 A1**
(43) Date of publication of application: **02.02.2022**
(21) Application number: 21188880.5
(22) Date of filing: 30.07.2021
(51) Int. Cl.: A43B 1/00, A43B 3/00, A43B 13/04, A43B 13/12, A43B 13/16, A43B 13/18

(54) **SHOE WITH LAYERED SOLE**

(30) Priority: 31.07.2020 US 202016944915
(71) Applicant: Cole Haan LLC, Greenland, NH 03840 (US)
(72) Inventor: JENKINS, Kyle, GREENLAND, 03840 (US); TEJADA BERNARD, A. Jose, GREENLAND, 03840 (US)
(74) Representative: Lavoix

(57) **Abstract**

A shoe includes a sole and an upper secured to the sole. The sole includes a midsole and an outsole. The midsole includes at least one foam midsole member being of foam and at least one gel midsole member being of gel. The at least one gel midsole member is located between the at least one foam midsole member and the outsole and spaces the at least one foam midsole member from the outsole such that when a wearer, wearing the shoe with the outsole in contact with a horizontal surface such as the ground, applies a downward force toward the horizontal surface and against the upper surface of the at least one foam midsole member, all of such downward force is transmitted from the midsole to the outsole via the at least one gel member.

## Description

### Background of the Invention

### Field of the Invention

The present invention pertains to a shoe with a layered sole construction.

### SUMMARY

One aspect of the disclosure is a shoe comprising a sole and an upper secured to the sole. The sole has a sole heel end and a sole toe end, the sole extending longitudinally from the sole heel end to the sole toe end. The sole has a lateral side extending longitudinally from the sole heel end to the sole toe end and a medial side extending longitudinally from the sole heel end to the sole toe end. The sole extends transversely from the lateral side to the medial side. The sole includes a sole heel region, a sole midfoot region, a sole forefoot region, and a sole toe region. The sole heel region extends longitudinally from the sole heel end to the sole midfoot region. The sole midfoot region extends longitudinally from the sole heel region to the sole forefoot region. The sole forefoot region extends longitudinally from the sole midfoot region to the sole toe region. The sole toe region extends longitudinally from the sole forefoot region to the sole toe end. The sole comprises a midsole and an outsole. The midsole comprises at least one foam midsole member and at least one gel midsole member, the at least one foam midsole member being of foam, the at least one gel midsole member being of gel. The at least one foam midsole member has an upper surface. The at least one gel midsole member is located between the at least one foam midsole member and the outsole and spaces the at least one foam midsole member from the outsole such that when a wearer, wearing the shoe with the outsole in contact with a horizontal surface such as the ground, applies a downward force toward the horizontal surface and against the upper surface of the at least one foam midsole member, all of such downward force is transmitted from the midsole to the outsole via the at least one gel member.

Another aspect of the disclosure is a shoe comprising a sole and an upper secured to the sole. The sole has a sole heel end and a sole toe end, the sole extending longitudinally from the sole heel end to the sole toe end. The sole has a lateral side extending longitudinally from the sole heel end to the sole toe end and a medial side extending longitudinally from the sole heel end to the sole toe end. The sole extends transversely from the lateral side to the medial side. The sole includes a sole heel region, a sole midfoot region, a sole forefoot region, and a sole toe region. The sole heel region extends longitudinally from the sole heel end to the sole midfoot region. The sole midfoot region extends longitudinally from the sole heel region to the sole forefoot region. The sole forefoot region extends longitudinally from the sole midfoot region to the sole toe region. The sole toe region extends longitudinally from the sole forefoot region to the sole toe end. The sole comprises a midsole and an outsole. The midsole comprises at least one foam midsole member and at least one gel midsole member, the at least one foam midsole member being of foam, the at least one gel midsole member being of gel. The at least one gel midsole member is located between the at least one foam midsole member and the outsole and spaces the at least one foam midsole member from the outsole such that when a wearer, wearing the shoe with the outsole in contact with a horizontal surface such as the ground, applies a downward force toward the horizontal surface and against the upper surface of the at least one foam midsole member, at least 75% of such downward force is transmitted from the midsole to the outsole via the at least one gel member.

Another aspect of the disclosure is a shoe comprising a sole and an upper secured to the sole. The sole has a sole heel end and a sole toe end, the sole extending longitudinally from the sole heel end to the sole toe end. The sole has a lateral side extending longitudinally from the sole heel end to the sole toe end and a medial side extending longitudinally from the sole heel end to the sole toe end. The sole extends transversely from the lateral side to the medial side. The sole includes a sole heel region, a sole midfoot region, a sole forefoot region, and a sole toe region. The sole heel region extends longitudinally from the sole heel end to the sole midfoot region. The sole midfoot region extends longitudinally from the sole heel region to the sole forefoot region. The sole forefoot region extends longitudinally from the sole midfoot region to the sole toe region. The sole toe region extends longitudinally from the sole forefoot region to the sole toe end. The sole comprises a midsole and an outsole. The midsole comprises at least one foam midsole member and at least one gel midsole member, the at least one foam midsole member being of foam, the at least one gel midsole member being of gel. The at least one gel midsole member has a gel midsole member top surface. The at least one gel midsole member is arranged and configured such that no element of the upper or the midsole above the gel midsole member top surface contacts the foam midsole member.

A second embodiment of the claimed invention concerns a shoe comprising a sole; and an upper secured to the sole and the sole having a sole heel end and a sole toe end, the sole extending longitudinally from the sole heel end to the sole toe end. The sole having a lateral side extending longitudinally from the sole heel end to the sole toe end and a medial side extending longitudinally from the sole heel end to the sole toe end, the sole extending transversely from the lateral side to the medial side, the sole including a sole heel region, a sole midfoot region, a sole forefoot region, and a sole toe region, the sole heel region extending longitudinally from the sole heel end to the sole midfoot region, the sole midfoot region extending longitudinally from the sole heel region to the sole forefoot region, the sole forefoot region extending longitudinally from the sole midfoot region to the sole toe region, the sole toe region extending longitudinally from the sole forefoot region to the sole toe end The sole further comprising a midsole and an outsole. The midsole comprising at least one foam midsole member and at least one gel midsole member, the at least one foam midsole member being of foam, the at least one gel midsole member being of gel. The at least one gel midsole member being between the at least one foam midsole member and the outsole and spacing the at least one foam midsole member from the outsole, such that when a wearer, wearing the shoe with the outsole in contact with a horizontal surface such as the ground, applies a downward force toward the horizontal surface and against the upper surface of the at least one foam midsole member, at least 75% of such downward force is transmitted from the midsole to the outsole via the at least one gel member.
The shoe of the second embodiment could be further shaped that the at least one gel midsole member is between the at least one foam midsole member and the outsole and spacing the at least one foam midsole member from the outsole, such that when a wearer, wearing the shoe with the outsole in contact with a horizontal surface such as the ground, applies a downward force toward the horizontal surface and against the upper surface of the at least one foam midsole member, at least 90% of such downward force is transmitted from the midsole to the outsole via the at least one gel member.
A third embodiment of the claimed invention concerns a shoe comprising a sole and an upper secured to the sole. The sole having a sole heel end and a sole toe end, the sole extending longitudinally from the sole heel end to the sole toe end, the sole having a lateral side extending longitudinally from the sole heel end to the sole toe end and a medial side extending longitudinally from the sole heel end to the sole toe end. The sole extending transversely from the lateral side to the medial side, the sole including a sole heel region, a sole midfoot region, a sole forefoot region, and a sole toe region, the sole heel region extending longitudinally from the sole heel end to the sole midfoot region, the sole midfoot region extending longitudinally from the sole heel region to the sole forefoot region, the sole forefoot region extending longitudinally from the sole midfoot region to the sole toe region, the sole toe region extending longitudinally from the sole forefoot region to the sole toe end. Furthermore, the sole comprising a midsole and an outsole. The midsole comprising a foam midsole member and at least one gel midsole member, the foam midsole member being of foam, the at least one gel midsole member being of gel and having a gel midsole member top surface. The at least one gel midsole member being arranged and configured such that no element of the upper or the midsole above the gel midsole member top surface contacts the foam midsole member.

Further features and advantages, as well as the operation, are described in detail below with reference to the accompanying drawings.

### BRIEF DESCRIPTION OF THE DRAWINGS

FIG. 1 is a bottom medial perspective view of an exemplary embodiment of a shoe with layered sole.
FIG. 2 is a front view of the shoe of FIG. 1.
FIG. 3 is a rear view of the shoe of FIG. 1.
FIG. 4 is a lateral side elevational view of the shoe of FIG. 1.
FIG. 5 is a medial side elevational view of the shoe of FIG. 1.
FIG. 6 is a top plan view of the shoe of FIG. 1.
FIG. 7 is a bottom plan view of the shoe of FIG. 1.
FIG. 8 is a longitudinal cross-sectional view taken along the plane of line 8-8 of Fig. 7, but with the upper removed.
FIG. 9a is a cross-sectional view taken along the plane of line 9a-9a of Figure 8.
FIG. 9b is a cross-sectional view taken along the plane of line 9b-9b of Figure 8.
FIG. 9c is a cross-sectional view taken along the plane of line 9c-9c of Figure 8.
FIG. 9d is a cross-sectional view taken along the plane of line 9d-9d of Figure 8.
FIG. 10 is a bottom medial perspective view of another embodiment of a shoe with a layered sole.
FIG. 11 is a lateral side elevational view of the shoe of FIG. 10.
FIG. 12 is medial side elevation view of the shoe of FIG. 10.
FIG. 13 is a bottom plan view of the shoe of FIG. 10.
FIG. 14 is a longitudinal cross-sectional view taken along the plane of line 14-14 of Fig. 10, but with the upper removed.
FIG. 15a is a cross-sectional view taken along the plane of line 14a-14a of Figure 14.
FIG. 15b is a cross-sectional view taken along the plane of line 14b-14b of Figure 14.
FIG. 15c is a cross-sectional view taken along the plane of line 14c-14c of Figure 14.
FIG. 15d is a cross-sectional view taken along the plane of line 14d-14d of Figure 14.

Reference numerals in the written specification and in the figures indicate corresponding items.

### DETAILED DESCRIPTION

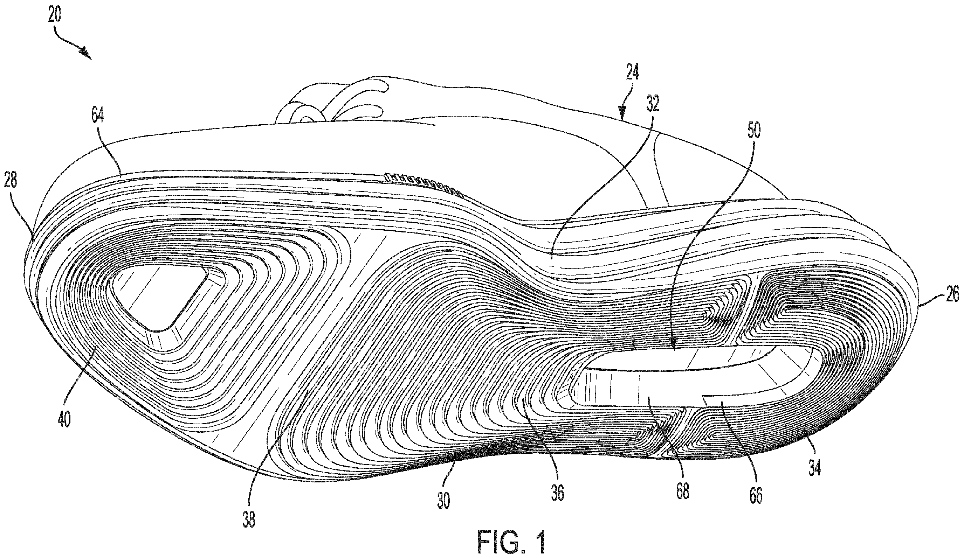

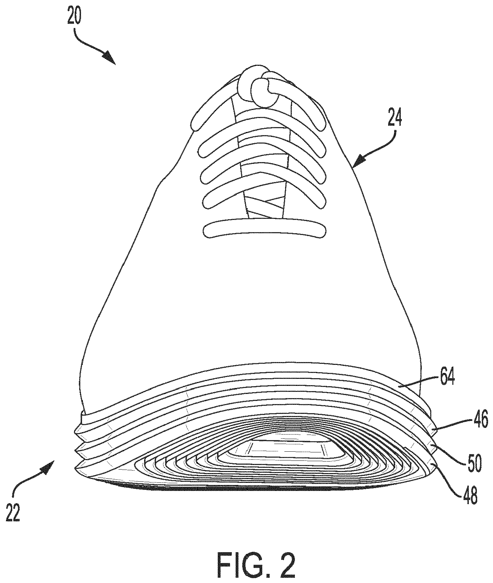

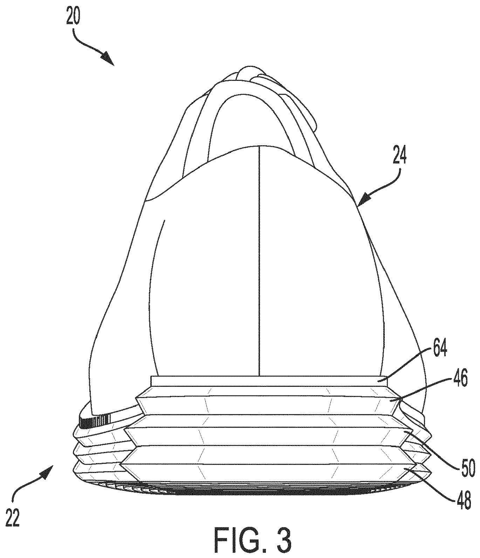

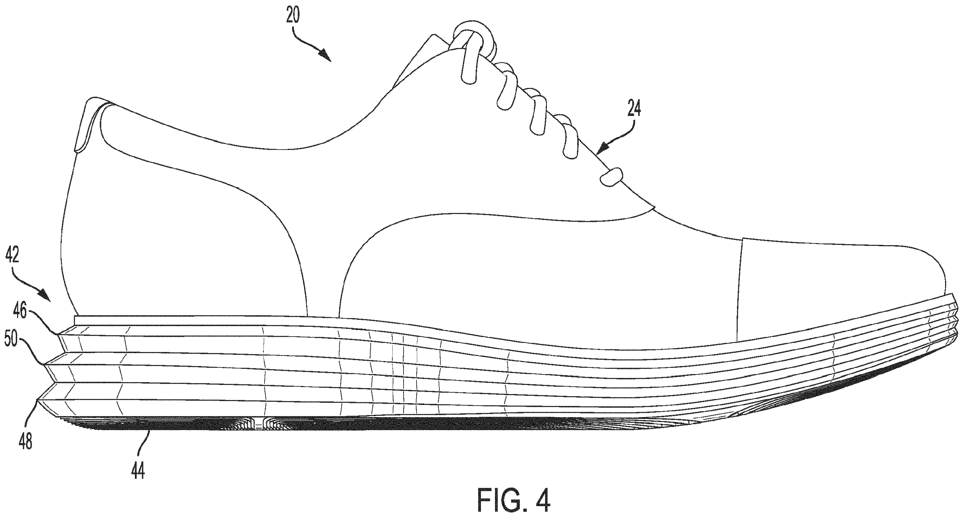

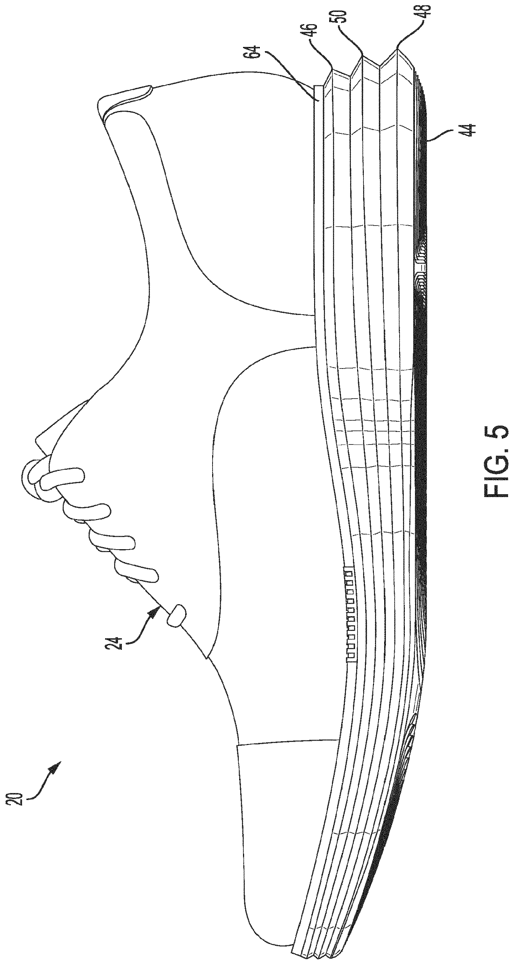

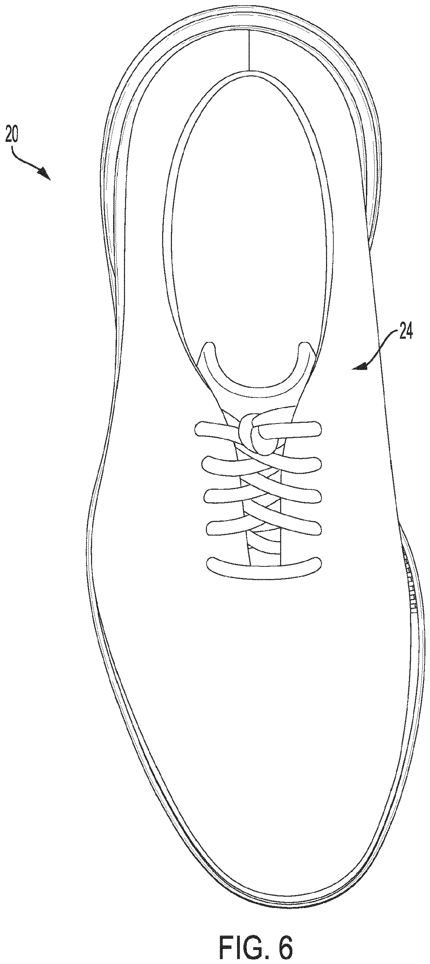

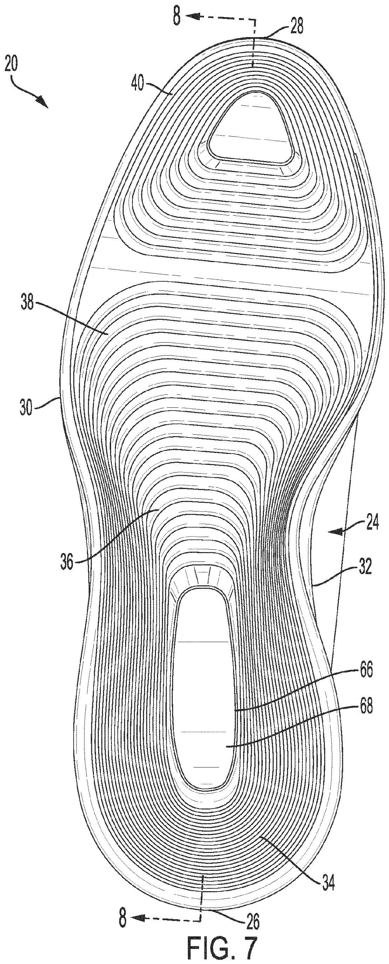

An embodiment of a shoe in accordance with the present disclosure is indicated generally by reference number 20 in FIGS. 1-7. The shoe 20 comprises a sole, generally indicated at 22, and an upper, generally indicated at 24. The upper 24 is secured to the sole 22. The sole 22 extends longitudinally from a sole heel end 26 to a sole toe end 28, and extends transversely from a lateral side 30 to a medial side 32. The sole includes a sole heel region 34, a sole midfoot region 36, a sole forefoot region 38, and a sole toe region 40. The sole heel region 34 extends longitudinally from the sole heel end 26 to the sole midfoot region 36. The sole midfoot region extends longitudinally from the sole heel region 34 to the sole forefoot region 38. The sole forefoot region 38 extends longitudinally from the sole midfoot region 36 to the sole toe region 40. The sole toe region 40 extends longitudinally from the sole forefoot region 38 to the sole toe end 28.

The sole 22 comprises a midsole 42 and an outsole 44. The midsole 42 comprises a first foam midsole member 46, a second foam midsole member 48, and a gel midsole member 50.

Both the first foam midsole member 46 and the second foam midsole member 48 are foam. For example, but without limitation, the first and second foam midsole members may be made from any suitable, light-weight closed-cell foam, such as compression molded ethylene-vinyl acetate (CMEVA) or injection phylon (IP). Preferably, the first foam midsole member 46 is comprised of CMEVA and the second foam midsole member 48 is comprised of IP. The first foam midsole 46 member preferably has a density between 0.23 and 0.25 grams per cubic centimeter, and an Asker C hardness between 48 and 52. The second foam midsole member 48 preferably has a density of 0.46 grams per cubic centimeter, and an Asker C hardness between 53 and 57.

The gel midsole member 50 is made from a gel, which does not have any gas pockets in the material. The gel midsole member 50 is made from a gel with an Asker C hardness between 50 and 55. The gel midsole member 150 may be made from materials such as a thermoplastic elastomer, polyurethane based gels, or silicone. Preferably, the gel midsole member 150 is made from a thermoplastic elastomer. Preferably, the gel midsole member 50 has a density of 0.91 grams per cubic centimeter.

The gel midsole member 50 has a gel midsole member top surface 60 and a gel midsole member bottom surface 62. The first foam midsole member 46 may extend from the sole heel region 34 to the sole toe region 40, or the first foam member 46 may extend from the sole heel end 26 to the sole toe end 28. The first foam midsole member 46 has an upper surface 52 and a lower surface 54. Similarly, the second foam midsole member 48 has an upper surface 56 and a lower surface 58. The second foam midsole member 48 may extend from the sole heel region 34 to the sole toe region 40, or the second foam midsole member 48 may extend from the sole heel end 26 to the sole toe end 28.

The top surface 52 of the first foam midsole member 46 contacts the upper 24. The top surface 60 of the gel midsole member 50 contacts the bottom surface 54 of the first foam midsole member 46. The bottom surface 62 of the gel midsole member 150 contacts the top surface 56 of the second foam midsole member 48. The bottom surface 58 of the second foam midsole member 48 contacts the outsole 44.

The outsole 44 may also comprise an outsole heel opening 66 in the sole heel region 34, and the first foam midsole member 46 may comprise a heel midsole opening 68 in the sole heel region 34 such that the gel midsole member 50 is visible as viewed from a bottom plan view of the shoe 20.

The gel midsole member 50 spaces the first foam midsole member 46 from the outsole 44 such that when a wearer, wearing the shoe 20 with the outsole 44 in contact with a horizontal surface such as the ground, applies a downward force toward the horizontal surface and against the upper surface 52 of the first foam midsole member 46, at least 75% of such downward force is transmitted from the first foam midsole member 46 to the outsole 44 via the at least one gel midsole member 50. Preferably, the gel midsole member 50 spaces the first foam midsole member 46 from the outsole 44 such that when a wearer, wearing the shoe 20 with the outsole 44 in contact with a horizontal surface such as the ground, applies a downward force toward the horizontal surface and against the upper surface 52 of the first midsole member 46, at least 90% of such downward force is transmitted from the first foam midsole member 46 to the outsole 44 via the at least one gel midsole member 50 . More preferably, the gel midsole member 50 spaces the first foam midsole member 46 from the outsole 44 such that when a wearer, wearing the shoe 20 with the outsole 44 in contact with a horizontal surface such as the ground, applies a downward force toward the horizontal surface and against the upper surface 52 of the first foam midsole member 46, 100% of such downward force is transmitted from the first foam midsole member 46 to the outsole 44 via the gel midsole member 50. For example, if a wearer weighing 150 pounds were to stand on one foot with the outsole 44 flat against the ground, all 150 pounds of downward force would be applied against the upper surface 52 of the first foam midsole member 46 and transmitted from the first foam midsole member 46 to the outsole 44 via the at least one gel midsole member 50. In other words, no portion of the first foam midsole member 46 contacts any portion of the second foam midsole member 48 to transmit forces directly between first and second midsole members, and no element of the sole 42 other than the gel midsole member 50 transmits forces from the first foam midsole member to the second foam midsole member. It is to be understood, however, that in an alternative embodiment an additional element may be included between the first foam midsole member and the gel member or between the gel member and the second foam midsole member. But it is envisioned that in such alternative embodiment all of the force transmitted from the first foam midsole member to the second foam midsole member is transmitted through the gel member. So from a force distribution perspective, the gel midsole member 50 is positioned in series between the first foam midsole member 46 and the second foam midsole member 48 with no other element of the sole 42 being in parallel with the gel member.

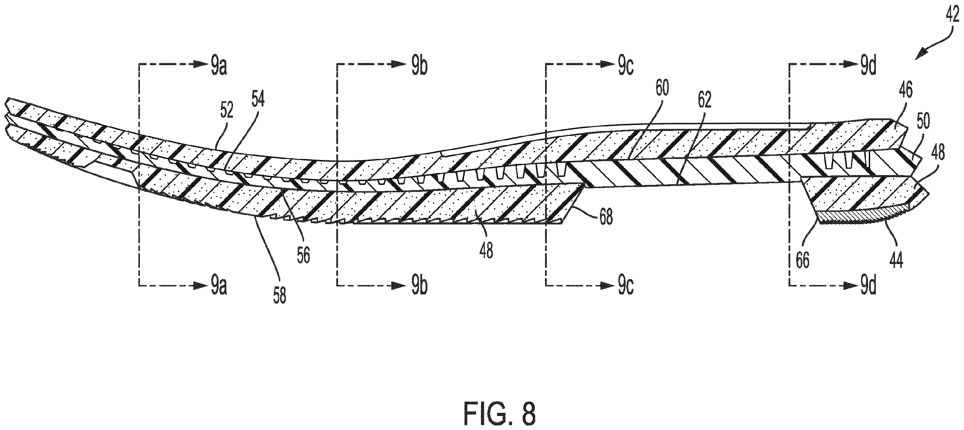

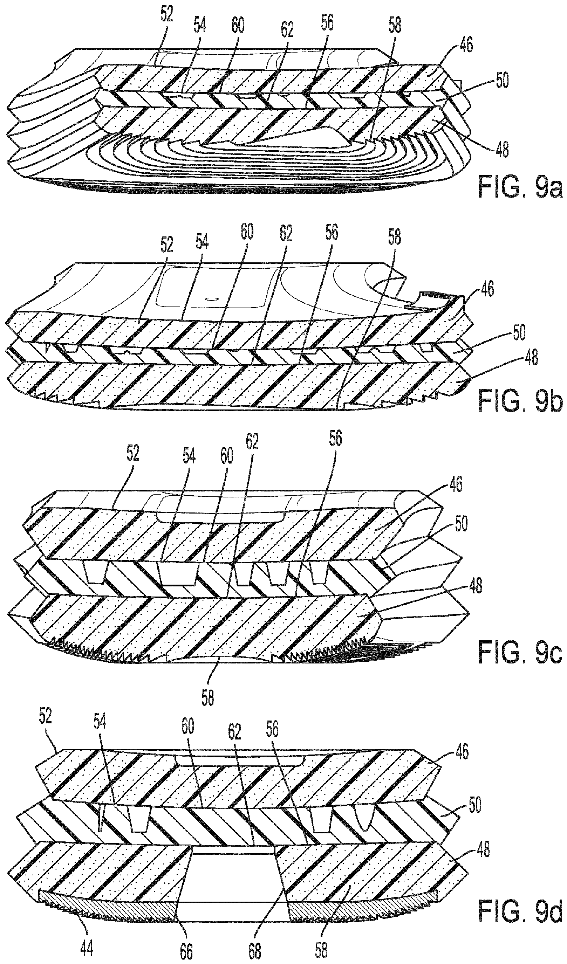

In the present embodiment, the gel midsole member 50 constitutes a single gel member (see FIGS. 1-9). It is to be understood, however, that multiple gel members may also be employed. The gel midsole member 50 may extend from the sole heel region 34 to the sole toe region 40, and may extend from the sole heel end 26 to the sole toe end 28.

The first foam midsole member 46 may extend from the sole heel region 34 to the sole toe region 40, and may extend from the sole heel end 26 to the sole toe end 28. Similarly, the second foam midsole member 48 may extend from the sole heel region 34 to the sole toe region 40 and may extend from the sole heel end 26 to the sole toe end 28.

The gel midsole member 50 may be arranged and configured such that no element of the upper 24 or the midsole 42 above the gel midsole member top surface 54 contacts the second foam midsole member 48. It should be understood that, for the purposes of this invention, the laces of the shoe 20 are not considered part of the upper 24 or midsole 42. As such, the shoe 20 may have laces, which could be made to contact the second foam midsole member 48 (e.g., when the laces are untied), while still meeting the above limitation.

The shoe 20 may also include a welt 64 adjacent the upper surface 52 of the first foam member 46 and the lower portion of the upper 24.

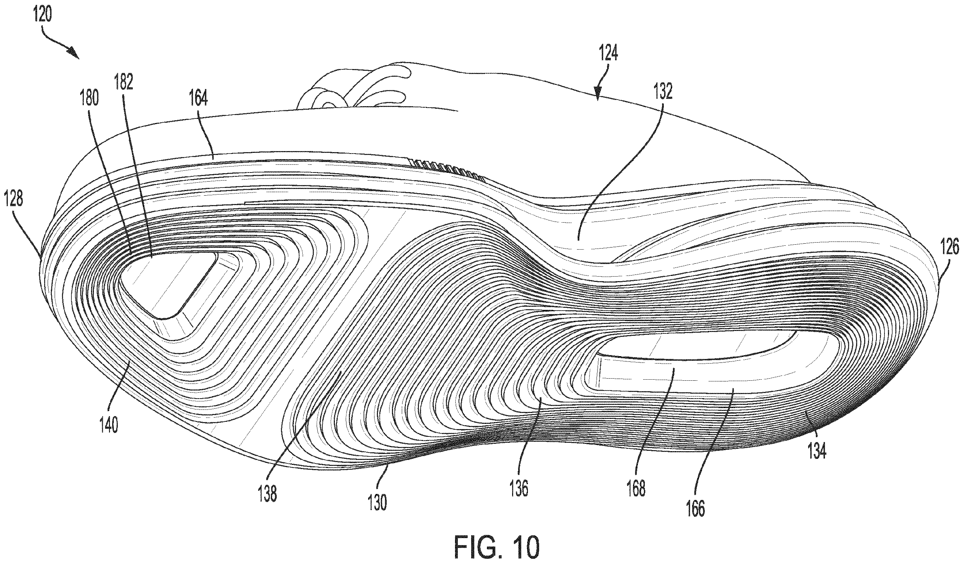

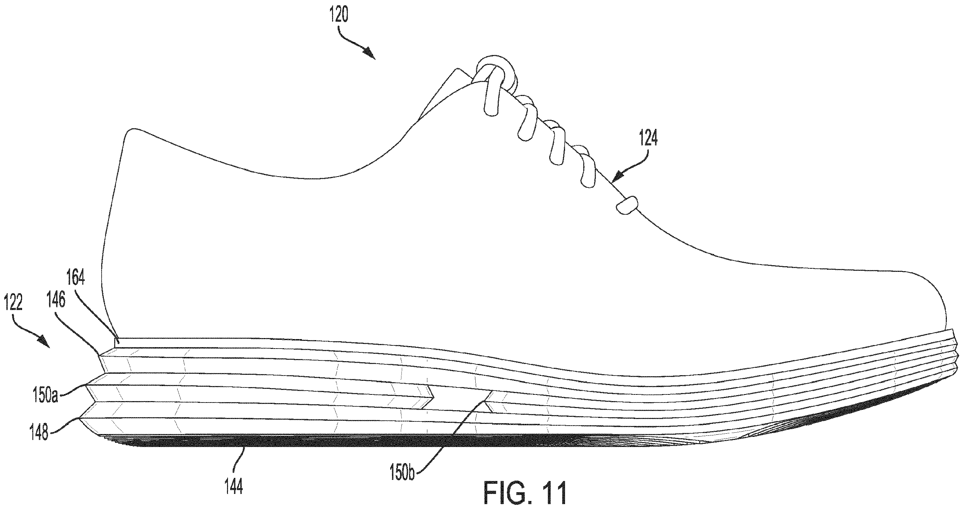

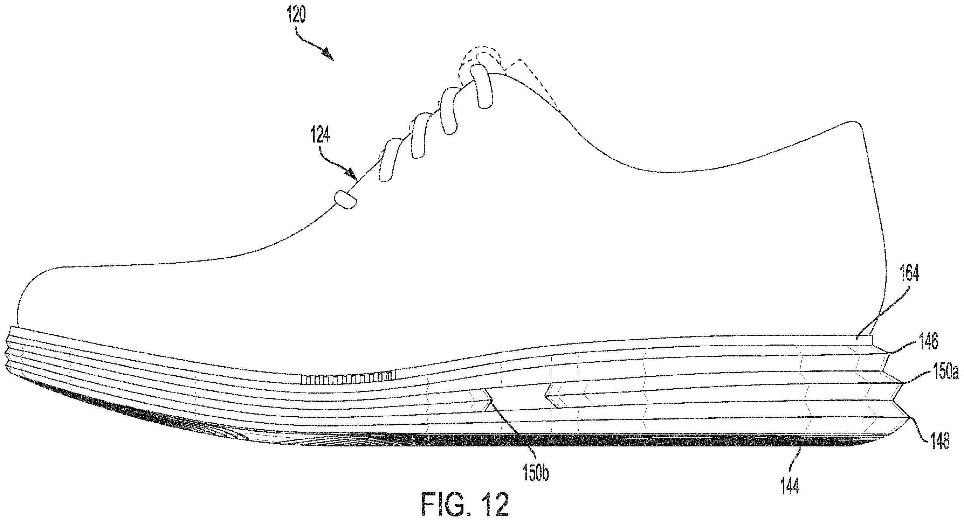

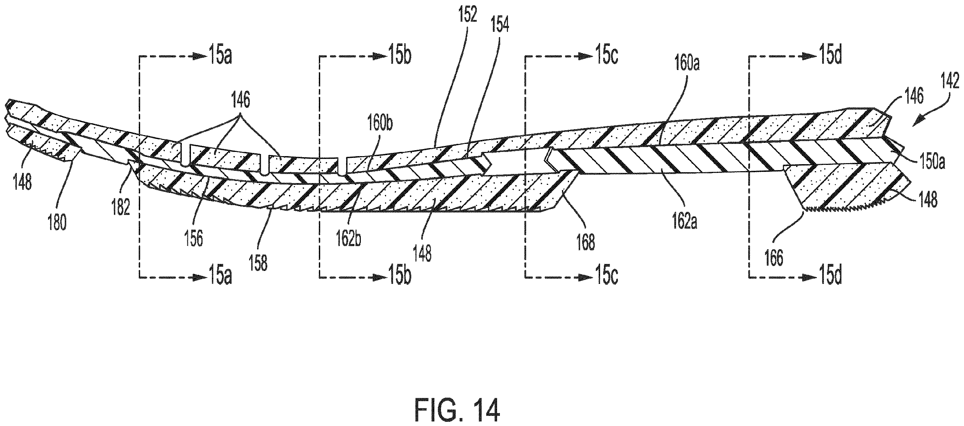

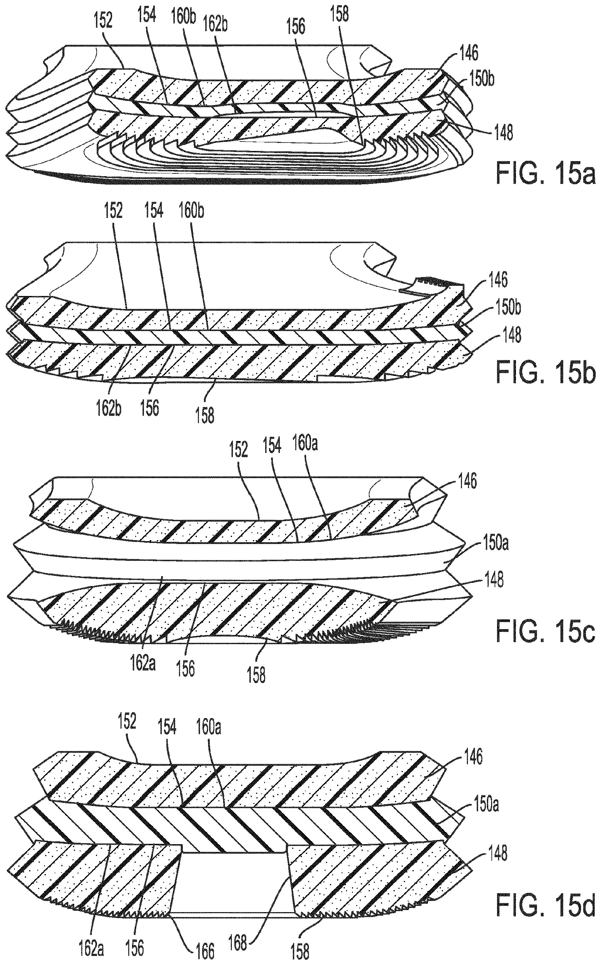

Another embodiment of a shoe, indicated at 120, is shown in FIGS 10-15d. The above description of the shoe 20 of FIGS. 1-9d applies equally to the shoe 120 of FIGS. 10-15d, except for the differences noted in the description of the embodiment of FIGS. 10-15d or shown in the drawings of FIGS. 10-15d. It is also to be understood that components, elements, features, or regions of the embodiment of FIGS. 10-15d which correspond to components, elements, features, or regions of the embodiment of FIGS. 10-15d have reference numbers corresponding to the reference numbers of the embodiment of FIGS. 1-9d, except the reference numbers of the embodiment of FIGS. 10-15d include a prefix "1."

The shoe 120 is similar to the shoe 20 of FIGS. 1-9d, except the shoe 120 includes a heel gel midsole member 150a and a forefoot gel midsole member 150b. The forefoot gel midsole member 150b is longitudinally spaced from the heel gel midsole member 150a. The forefoot gel midsole member 150b has a top surface 160b and a bottom surface 162b, and the heel gel midsole member 150a has a top surface 160a and a bottom surface 162a.

The top surface 160b of the forefoot gel midsole member 150b contacts the bottom surface 154 of the first foam midsole member 146. The bottom surface 162b of the forefoot gel midsole member 150b contacts the top surface 156 of the second foam midsole member 148. Similarly, the top surface 160a of the heel gel midsole member 150a contacts the bottom surface 154 of the first midsole member 146. The bottom surface 162a of the heel gel midsole member 150a contacts the top surface 156 of the second foam midsole member 148.

The forefoot gel midsole member 150b and the heel gel midsole member 150a space the first foam midsole member 146 from the outsole 144 such that when a wearer, wearing the shoe 120 with the outsole 144 in contact with a horizontal surface such as the ground, applies a downward force toward the horizontal surface and against the upper surface 152 of the first foam midsole member 146, at least 75% of such downward force is transmitted from the first foam midsole member 146 to the outsole 144 via the forefoot gel midsole member 150b and the heel gel midsole member 150a, collectively. Preferably, the forefoot gel midsole member 150b and the heel gel midsole member 150a space the first foam midsole member 146 from the outsole 144 such that when a wearer, wearing the shoe 120 with the outsole 144 in contact with a horizontal surface such as the ground, applies a downward force toward the horizontal surface and against the upper surface 152 of the first foam midsole member 146, at least 90% of such downward force is transmitted from the first foam midsole member 146 to the outsole 144 via the forefoot gel midsole member 150b and the heel gel midsole member 150a, collectively. More preferably, the forefoot gel midsole member 150b and the heel gel midsole member 150a space the first foam midsole member 146 from the outsole 144 such that when a wearer, wearing the shoe 120 with the outsole 144 in contact with a horizontal surface such as the ground, applies a downward force toward the horizontal surface and against the upper surface 152 of the first foam midsole member 146, 100% of such downward force is transmitted from the first foam midsole member 146 to the outsole 144 via the forefoot gel midsole member 150b and the heel gel midsole member 150a, collectively.

No portion of the first foam midsole member 146 contacts any portion of the second foam midsole member 148 to transmit forces directly between first and second midsole members, and no element of the sole 142 other than the gel midsole members 150a and 150b transmits forces from the first foam midsole member to the second foam midsole member. So, from a force distribution perspective, the heel gel midsole member 150a and the forefoot gel midsole member 150b are each positioned in series between the first foam midsole member 146 and the second foam midsole member 148 with no other element of the sole 142 being in parallel with either of the gel members. As such, the forefoot gel midsole member 150b and the heel gel midsole member 150a collectively bear the downward force exerted on the upper surface 152 of the first foam midsole member 146.

The forefoot gel midsole member 150b and the heel gel midsole member 150a are arranged and configured such that no element of the upper 124 or the midsole 142 above either the top surface 160b of the forefoot gel midsole member 150b or the top surface 160a of the heel gel midsole member 160a contacts the second foam midsole member 148. It should be understood that, for the purposes of this invention, the laces of the shoe 120 are not considered part of the upper 124 or midsole 142. As such, the shoe 120 may have laces, which could be made to contact the second foam midsole member 148 (e.g., when the laces are untied), while still meeting the above limitation.

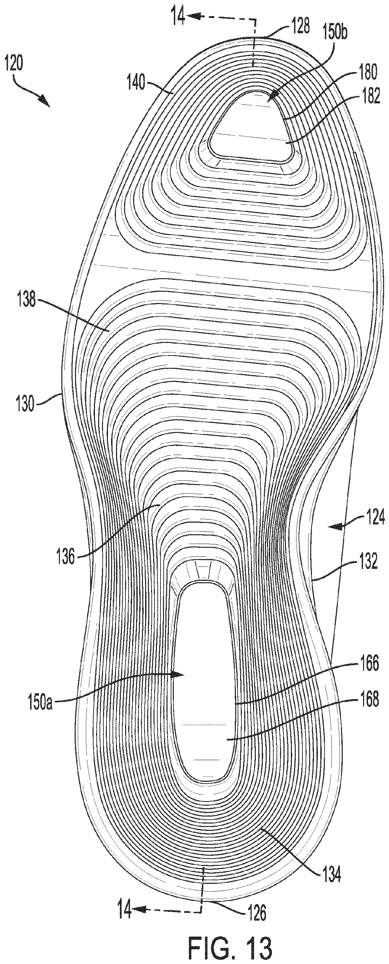

The outsole 134 may comprise an outsole forefoot opening 180 in the sole forefoot region 138, and the first foam midsole member 146 may comprise a forefoot midsole opening 182 in the sole forefoot region 138, such that the forefoot gel midsole member 150b is visible as viewed from a bottom plan view of the shoe 120 (see FIG 13).

In view of the foregoing, it should be appreciated that the invention has several advantages over the prior art.

It should also be understood that when introducing elements of the present invention in the claims or in the above description of exemplary embodiments of the invention, the terms "comprising," "including," and "having" are intended to be open-ended and mean that there may be additional elements other than the listed elements. Additionally, the term "portion" should be construed as meaning some or all of the item or element that it qualifies. Moreover, use of identifiers such as first, second, and third should not be construed in a manner imposing any relative position or time sequence between limitations.

As various modifications could be made in the constructions and methods herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended hereto and their equivalents.

## Claims

1. A shoe (20) comprising:
a sole (22); and
an upper (24) secured to the sole (22);
the sole (22) having a sole heel (26) end and a sole toe end (28), the sole (22) extending longitudinally from the sole heel (26) end to the sole toe end (28), the sole having a lateral side (30) extending longitudinally from the sole heel end to the sole toe end and a medial side (32) extending longitudinally from the sole heel end to the sole toe end (28), the sole (22) extending transversely from the lateral side (30) to the medial side (32), the sole including a sole heel region (34), a sole midfoot region (36), a sole forefoot region (38), and a sole toe region (40), the sole heel region (34) extending longitudinally from the sole heel end to the sole midfoot region (36), the sole midfoot region extending longitudinally from the sole heel region (34) to the sole forefoot region, the sole forefoot region extending longitudinally from the sole midfoot region to the sole toe region, the sole toe region extending longitudinally from the sole forefoot region (38) to the sole toe end;
the sole comprising a midsole (42) and an outsole (44);
the midsole (44) comprising at least one foam midsole member (46, 48) and at least one gel midsole member (50), the at least one foam midsole member (46, 48) being of foam, the at least one gel midsole member (50) being of gel, the at least one foam midsole member having an upper surface (46, 48);
the at least one gel midsole member (50) being located between the at least one foam midsole member (46, 48) and the outsole and spacing the at least one foam midsole member (50) from the outsole, such that when a wearer, wearing the shoe (20) with the outsole in contact with a horizontal surface such as the ground, applies a downward force toward the horizontal surface and against the upper surface of the at least one foam midsole member (46, 48), all of such downward force is transmitted from the midsole to the outsole via the at least one gel member.

2. The shoe of claim 1 wherein the at least one gel midsole member (50) constitutes a single gel member extending from the sole heel region to the sole toe region.

3. The shoe of claim 2 wherein the at least one foam midsole member (46, 48) comprises a first foam midsole member, the shoe (20) further comprising a second foam midsole member, the second foam midsole member being located between the upper and the single gel member.

4. The shoe of claim 2 wherein the single gel member extends from the sole heel end (34) to the sole toe end (28).

5. The shoe of claim 4 wherein the at least one foam midsole member (46, 48) comprises a first foam member extending from the sole heel region (34) to the sole toe region (40).

6. The shoe of claim 5 wherein the first foam member (46, 48) extends from the sole heel end to the sole toe end.

7. The shoe of claim 1 wherein the at least one gel midsole member (50) comprises a forefoot gel midsole member located in the sole forefoot region and a heel gel midsole member located in the sole heel region, the forefoot gel midsole member being longitudinally spaced from the heel gel midsole member.

8. The shoe of claim 7 wherein the at least one foam midsole member comprises a first foam midsole member, the shoe further comprising a second foam midsole member, the first foam midsole member having a top surface and a bottom surface, the second foam midsole member having a top surface and a bottom surface, the forefoot gel midsole member having a top surface and a bottom surface, the heel gel midsole member having a top surface and a bottom surface, the bottom surface of the forefoot gel midsole member contacting the top surface of the first foam midsole member, the top surface of the forefoot gel midsole member contacting the bottom surface of the second foam midsole member, the bottom surface of the heel gel midsole member contacting the top surface of the first foam midsole member, the top surface of the heel gel midsole member contacting the bottom surface of the second foam midsole member, the bottom surface of the first foam midsole member contacting the outsole.

9. The shoe of claim 8 wherein the first foam midsole member extends from the sole heel region to the sole toe region, and wherein the second foam midsole member extends from the sole heel region to the sole toe region.

10. The shoe of claim 9 wherein the first foam midsole member extends from the sole heel end to the sole toe end, and wherein the second foam midsole member extends from the sole heel end to the sole toe end.

11. The shoe of claim 9 wherein the outsole (44) comprises an outsole forefoot opening in the sole forefoot region and the first foam midsole member comprises a forefoot midsole opening in the sole forefoot region such that the forefoot gel midsole member is visible as viewed from a bottom plan view of the shoe.

12. The shoe of claim 11 wherein the outsole (44) comprises an outsole heel region opening in the sole heel region and the first foam midsole member comprises a heel midsole opening in the sole heel region such that the heel gel midsole member is visible as viewed from a bottom plan view of the shoe.

13. The shoe of claim 9 wherein the outsole (44) comprises an outsole heel region opening in the sole heel region and the first foam midsole member comprises a heel midsole opening in the sole heel region such that the heel gel midsole member is visible as viewed from a bottom plan view of the shoe.

14. The shoe of claim 1 wherein the at least one gel midsole member (50) has an Asker C hardness between 50 and 55.

15. The shoe of claim 1 wherein the at least one gel midsole member (50) further comprises a gel midsole member top surface (54), the at least one gel midsole member (50) being arranged and configured such that no element of the upper or the midsole above the gel midsole member top surface contacts the foam midsole member or wherein the at least one gel midsole member (50) is between the at least one foam midsole member and the outsole (44)and spacing the at least one foam midsole member from the outsole (44), such that when a wearer, wearing the shoe with the outsole in contact with a horizontal surface such as the ground, applies a downward force toward the horizontal surface and against the upper surface of the at least one foam midsole member, at least 90% of such downward force is transmitted from the midsole to the outsole via the at least one gel member.
